# EUROPÄISCHE PATENTSCHRIFT

(11) **EP 4 567 315 B1**
(45) Veröffentlichungstag und Bekanntmachung des Hinweises auf die Patenterteilung: **15.07.2026**
(21) Anmeldenummer: 24216719.5
(22) Anmeldetag: 02.12.2024
(51) Int. Cl.: F16L 55/46, F16L 55/26, B08B 9/055, E04G 21/04, F16L 55/38, F28G 1/12, F16L 101/12

(54) **EINBRINGUNGSEINRICHTUNG, SYSTEM UND VERFAHREN**
DELIVERY DEVICE, SYSTEM AND METHOD
DISPOSITIF, SYSTÈME ET PROCÉDÉ D'INTRODUCTION

(30) Priorität: 05.12.2023 DE 102023133970
(43) Veröffentlichungstag der Anmeldung: 11.06.2025
(73) Patentinhaber: Putzmeister Engineering GmbH, 72631 Aichtal (DE)
(72) Erfinder: Kandler, Andreas, 73760 Ostfildern (DE); Luz, Sebastian, 78576 Emmingen-Liptingen (DE)
(74) Vertreter: Patentanwälte Ruff, Wilhelm, Beier, Dauster & Partner mbB

(56) Entgegenhaltungen:
- EP-A1- 4 357 657
- DE-A1- 102006 020 776
- DE-A1- 4 436 247
- US-A- 4 359 797
- US-A- 5 957 675

## Beschreibung

### ANWENDUNGSGEBIET UND STAND DER TECHNIK

Die Erfindung betrifft eine Einbringungseinrichtung zum Einbringen einer Medientrenneinrichtung in eine Dickstoff-Förderleitung einer Baumaschine zum Fördern von Dickstoff. Die Erfindung betrifft zudem ein System, welches eine derartige Einbringungseinrichtung aufweist. Außerdem betrifft die Erfindung ein Verfahren zum, insbesondere automatischen, Betreiben eines derartigen Systems.

Aus der Offenlegungsschrift DE 10 2006 020776 A1 ist eine Vorrichtung zur Einführung von Reinigungskörpern in eine Förderleitung für Dickstoffe bekannt. Die Vorrichtung umfasst eine ein Gehäuse und einen in diesem verschiebbar angeordneten Schieber aufweisenden Rohrschleuse, wobei das Gehäuse über einen Eingangsstutzen und einen Ausgangsstutzen an die Förderleitung anschließbar und an ein mit Reinigungskörpern bestückbares Magazin angeschlossen ist. Der Schieber ist mit einer Durchgangskammer und mindestens einer gegenüber dieser versetzt angeordneten Sperrzone mittels einer Steuereinrichtung wahlweise zwischen den Ein- und Ausgangsstutzen oder hinter dem Einführstutzen positionierbar. Das Magazin weist mindestens einen von oben in eine mit dem Einführstutzen kommunizierende Vorkammer mündenden Magazinbehälter zur Aufnahme von mehreren Reinigungskörpern sowie ein über die Steuerungseinrichtung ansteuerbares, durch die Vorkammer hindurch unter Mitnahme eines dort befindlichen Reinigungskörpers über den Einführstutzen in die Durchgangskammer verschiebbares Einführorgan auf.

### AUFGABE UND LÖSUNG

Es ist eine Aufgabe der Erfindung, eine Einbringungseinrichtung zum Einbringen einer Medientrenneinrichtung in eine Dickstoff-Förderleitung einer Baumaschine zum Fördern von Dickstoff sowie ein System mit einer derartigen Einbringungseinrichtung und ein Verfahren zum, insbesondere automatischen, Betreiben eines derartigen Systems zu schaffen, welche jeweils besondere, insbesondere verbesserte, Eigenschaften aufweisen.

Diese Aufgabe wird gelöst durch die Gegenstände der unabhängigen Patentansprüche. Bevorzugte Ausführungsformen sind Gegenstand der abhängigen Patentansprüche.

Eine erfindungsgemäße Einbringungseinrichtung dient zum Einbringen einer Medientrenneinrichtung in eine Dickstoff-Förderleitung einer Baumaschine zum Fördern von Dickstoff. Die mittels der Einbringungseinrichtung in die Dickstoff-Förderleitung einbringbare Medientrenneinrichtung kann einen Rohrleitungsmolch aufweisen oder ein Rohrleitungsmolch sein. Die Einbringungseinrichtung kann als "Molchlader" bezeichnet werden. Die Medientrenneinrichtung kann mehrere Rohrleitungsmolche umfassen, die nebeneinander angeordnet sind, um ein Rohrleitungsmolchpaket der Medientrenneinrichtung auszubilden.

Die erfindungsgemäße Einbringungseinrichtung weist ein Gehäuse auf, welches einen Gehäuseinnenraum zum Hindurchführen einer in die Dickstoff-Förderleitung einbringbaren Medientrenneinrichtung entlang einer Einbringrichtung der Einbringungseinrichtung aufweist. Der Gehäuseinnenraum kann dazu angepasst sein, die Medientrenneinrichtung kann durch den Gehäuseraum hindurchzuführen, insbesondere hindurchzuzwängen.

Die erfindungsgemäße Einbringungseinrichtung weist ferner eine Ausgangsöffnung auf, welche den Gehäuseinnenraum in Einbringrichtung derart öffnet, dass eine in dem Gehäuseinnenraum befindliche Medientrenneinrichtung durch die Ausgangsöffnung hindurch aus der Einbringungseinrichtung heraus in die Dickstoff-Förderleitung, insbesondere hinein, einbringbar ist. Die Ausgangsöffnung kann dazu angepasst sein, die Medientrenneinrichtung aus dem Gehäuseinnenraum heraus durch die Ausgangsöffnung hindurchzuführen, insbesondere hindurchzuzwängen.

Außerdem weist die erfindungsgemäße Einbringungseinrichtung eine kontrollierbare Beaufschlagungseinrichtung auf, die zum wenigstens bereichsweisen Beaufschlagen des Gehäuseinnenraums mit einer Treibflüssigkeit zum Vortreiben einer in Einbringrichtung in die Dickstoff-Förderleitung einzubringenden sowie - alternativ oder zusätzlich - eingebrachten Medientrenneinrichtung von der Einbringungseinrichtung weg ausgebildet ist. Die Beaufschlagungseinrichtung kann kontrollabhängig von der Treibflüssigkeit durchströmbar sein.

Darüber hinaus weist die erfindungsgemäße Einbringungseinrichtung eine Entlüftungseinrichtung auf, die zum Entlüften wenigstens eines Innenraumbereichs des Gehäuseinnenraums beim wenigstens bereichsweisen Beaufschlagen mit Treibflüssigkeit ausgebildet ist. Die Entlüftungseinrichtung ist insbesondere von Luft durchströmbar ausgebildet.

Zudem weist die erfindungsgemäße Einbringungseinrichtung einen Kolben auf, wobei der Kolben relativ zu dem Gehäuse in der Einbringrichtung verstellbar ist, um eine in Einbringrichtung vor dem Kolben befindliche Medientrenneinrichtung relativ zu dem Gehäuse zu verstellen. Es versteht sich, dass vor dem Kolben befindliche Medientrenneinrichtung mittels des Kolbens in Einbringrichtung verstellbar ist.

Erfindungsgemäß weist der Kolben eine Aufnahme-Endposition auf, in welcher der Kolben entgegen der Einbringrichtung von dem Gehäuse derart entfernt ist, dass, insbesondere genau, zwischen dem Kolben und dem Gehäuseinnenraum eine mittels des Kolbens in den Gehäuseinnenraum hineinführbare Medientrenneinrichtung aufnehmbar ist.

Erfindungsgemäß weist der Kolben außerdem eine Entlüftungs-Zwischenposition auf, in welcher die Beaufschlagungseinrichtung und die Entlüftungseinrichtung mittels des Gehäuseinnenraums fluidleitend miteinander verbunden sind und in welcher der Gehäuseinnenraum der Ausgangsöffnung entgegen der Einbringrichtung gegenüberliegend mittels des Kolbens fluiddicht verschlossen ist.

Erfindungsgemäß weist der Kolben außerdem eine Einbring-Endposition auf, in welcher der Kolben innerhalb des Gehäuseinnenraums die Beaufschlagungseinrichtung fluiddicht von der Entlüftungseinrichtung trennt.

Insbesondere betrifft die Erfindung also: Eine Einbringungseinrichtung zum Einbringen einer Medientrenneinrichtung in eine Dickstoff-Förderleitung einer Baumaschine zum Fördern von Dickstoff, wobei die Einbringungseinrichtung aufweist: ein Gehäuse, welches einen Gehäuseinnenraum aufweist, eine den Gehäuseinnenraum öffnende Ausgangsöffnung, eine kontrollierbare Beaufschlagungseinrichtung zum wenigstens bereichsweisen Beaufschlagen des Gehäuseinnenraums mit einer Treibflüssigkeit, eine Entlüftungseinrichtung, und einen Kolben, der relativ zu dem Gehäuse von einer Aufnahme-Endposition über eine Entlüftungs-Zwischenposition in eine Einbring-Endposition verstellbar ist, um die Medientrenneinrichtung in die Dickstoff-Förderleitung einzubringen.

Die erfindungsgemäße Einbringungseinrichtung erlaubt es vorteilhaft, insbesondere durch Wechselwirken des in der Entlüftungs-Zwischenposition befindlichen Kolbens mit der Entlüftungseinrichtung und der kontrollierbaren Beaufschlagungseinrichtung, einen zwischen der vor dem Kolben befindlichen Medientrenneinrichtung und dem Kolben vorhandenen, insbesondere spaltförmigen, Innenraumbereich des Gehäuseinnenraums zu entlüften, so dass sich zwischen dem Kolben und der Medientrenneinrichtung eine wenigstens im Wesentlichen gasblasenfreie, insbesondere luftblasenfreie, Flüssigkeitssäule von Treibflüssigkeit zum Vortreiben der Medientrenneinrichtung von der Einbringungseinrichtung weg erzeugen lässt. Auf diese Weise lässt sich eine Explosionsgefahr verringern oder sogar vollständig vermeiden, die durch eine bei Umgebungskontakt erfolgende plötzliche Entspannung von in der Flüssigkeitssäule vorhandenen komprimierten Gasblasen bei unzureichender Entlüftung bedingt sein kann.

Der Begriff "konfiguriert" kann für den Begriff "ausgebildet" synonym verwendet werden.

Die Begriffe "umfasst" oder "hat" können untereinander sowie für den Begriff "aufweist" synonym verwendet werden.

"Kontrollieren" kann im vorliegenden Zusammenhang "steuern" und/oder "regeln" bedeuten.

Der Dickstoff kann ein Baustoff sein. Der Dickstoff kann eine breiartige Mischung unterschiedlicher Stoffe sein. Der Dickstoff kann Mörtel, Zement, Estrich oder Beton, jeweils in einem misch- und/oder förderfähigen Zustand, sein. Im misch- und/oder förderfähigen Zustand ist der Dickstoff noch nicht ausgehärtet oder abgebunden.

Zweckmäßig ist die Treibflüssigkeit Frischwasser oder Brauchwasser oder ein Gemisch aus Frischwasser und Brauchwasser.

Zweckmäßig ist der Kolben in der Einbringrichtung von seiner Aufnahme-Endposition ausgehend über seine Entlüftungs-Zwischenposition in seine Einbring-Endposition verstellbar, insbesondere und umgekehrt entgegen der Einbringrichtung zurück. Die Einbringungseinrichtung kann mittels einer kontrollierbaren Schiebereinrichtung an die Dickstoff-Förderleitung, insbesondere automatisch, anfügbar und/oder von der Dickstoff-Förderleitung, insbesondere automatisch, abtrennbar sein.

In Ausgestaltung der Erfindung weist die Beaufschlagungseinrichtung einen Fluidkanal zum Durchfließen mit Treibflüssigkeit auf. Dabei mündet der Fluidkanal, insbesondere quer zu der Einbringrichtung sowie - alternativ oder zusätzlich - entgegen einer Schwerkraftrichtung, in den Gehäuseinnenraum. Der Fluidkanal kann unter einem Winkel von -90° bis +90° relativ zu der Schwerkraftrichtung in den Gehäuseinnenraum münden. Insbesondere mündet der Fluidkanal rechtwinklig zu der Einbringrichtung in den Gehäuseinnenraum.

In Ausgestaltung der Erfindung weist die Entlüftungseinrichtung eine Sensoreinrichtung zur Detektion von Treibflüssigkeit auf. Insbesondere ist die Sensoreinrichtung zur Detektion von die Entlüftungseinrichtung benetzender Treibflüssigkeit ausgebildet. Alternativ oder zusätzlich kann die Sensoreinrichtung zur Detektion von in die Entlüftungseinrichtung hineinfließender Treibflüssigkeit ausgebildet sein. Alternativ oder zusätzlich kann die Sensoreinrichtung zur Detektion von durch die Entlüftungseinrichtung hindurchfließender Treibflüssigkeit ausgebildet sein. Vorteilhaft ermöglicht es die Sensoreinrichtung der Entlüftungseinrichtung, eine, insbesondere im Wesentlichen vollständige, Entlüftung des Innenraumbereichs des Gehäuseinnenraums, insbesondere zwischen dem Kolben und der vor dem Kolben befindlichen Medientrenneinrichtung, zu erkennen.

In weiterer Ausgestaltung der Erfindung weist die kontrollierbare Beaufschlagungseinrichtung eine kontrollierbare Ventileinrichtung auf, wobei die Ventileinrichtung kontrollabhängig von Treibflüssigkeit zur wenigstens bereichsweisen Beaufschlagung des Gehäuseinnenraums durchfließbar ist. Insbesondere kann die Ventileinrichtung in Abhängigkeit von einer Stellung des Kolbens von Treibflüssigkeit durchfließbar sein. Insbesondere ist die kontrollierbare Ventileinrichtung zur wenigstens bereichsweisen Beaufschlagung des Gehäuseinnenraums von Treibflüssigkeit durchfließbar, wenn sich der Kolben nicht in seiner Aufnahme-Endposition befindet.

In weiterer Ausgestaltung der Erfindung kommuniziert die Entlüftungseinrichtung von dem Gehäuseinnenraum abgewandt mit einer äußeren Umgebung der Einbringungseinrichtung fluidleitend. Insbesondere kann mittels der Entlüftungseinrichtung wenigstens der Innenraumbereich des Gehäuseinnenraums zu der äußeren Umgebung hin entlüftet werden, indem in dem Innenraumbereich vorhandene Luft mittels den Innenraumbereich beaufschlagender Treibflüssigkeit verdrängt wird. Insbesondere durch Verdrängung mittels Treibflüssigkeit, kann in dem Innenraumbereich des Gehäuseinnenraums vorhandene Luft kann mittels der Entlüftungseinrichtung in die äußere Umgebung abgeleitet werden, insbesondere ausschließlich, wenn sich der Kolben in seiner Entlüftungs-Zwischenposition befindet.

In weiterer Ausgestaltung der Erfindung weist die Entlüftungseinrichtung einen Entlüftungskanal zum Durchfließen mit Luft auf. Der Entlüftungskanal mündet, insbesondere quer zu der Einbringrichtung sowie - alternativ oder zusätzlich - in Schwerkraftrichtung, in den Gehäuseinnenraum. Insbesondere kann der Entlüftungskanal an einer bezüglich der Schwerkraftrichtung höchstgelegenen Stelle des Gehäuseinnenraums in den Gehäuseinnenraum münden. Der Entlüftungskanal kann insbesondere bezüglich der Schwerkraftrichtung oben an dem Gehäuse unter einem Winkel von +15° bis -15° in den Gehäuseinnenraum münden. Vorzugsweise mündet der Entlüftungskanal senkrecht zu der Einbringrichtung und in Schwerkraftrichtung in den Gehäuseinnenraum.

In weiterer Ausgestaltung der Erfindung münden der Fluidkanal und der Entlüftungskanal zueinander in einem, insbesondere axialen, Abstand bezüglich der Einbringrichtung in den Gehäuseinnenraum. Insbesondere ist der Abstand dabei wenigstens so groß wie eine, insbesondere axiale, Erstreckung einer, insbesondere quer zur Einbringrichtung umlaufenden, Dichtungseinrichtung des Kolbens entlang der Einbringrichtung. Entsprechend kann die Dichtungseinrichtung des Kolbens in der Entlüftungs-Zwischenposition des Kolbens in dem Abstand zwischen dem Fluidkanal und dem Entlüftungskanal angeordnet und, insbesondere umlaufend, an das Gehäuse fluiddicht angelegt sein, um den Fluidkanal und den Entlüftungskanal fluiddicht voneinander zu trennen.

In weiterer Ausgestaltung der Erfindung weist das Gehäuse eine Entlüftungsöffnung auf, mittels welcher der Entlüftungskanal und der Gehäuseinnenraum fluidleitend miteinander kommunizieren. Dabei verschließt der Kolben, insbesondere ausschließlich, in seiner Einbring-Endposition die Entlüftungsöffnung. Auf diese Weise kann sichergestellt werden, dass die Treibflüssigkeit, insbesondere ohne Druckverlust über die Entlüftungsöffnung, im Wesentlichen vollständig zum Vortreiben der in Einbringrichtung vor dem Kolben angeordneten Medientrenneinrichtung genutzt werden kann.

Zweckmäßig weist die Entlüftungsöffnung einen Innendurchmesser von 5 mm bis 100 mm, insbesondere von 5 mm bis 20 mm, insbesondere von etwa 15 mm, auf.

In weiterer Ausgestaltung der Erfindung weist die Einbringungseinrichtung eine kontrollierbare Antriebseinrichtung zum, insbesondere linearen, Verstellen des Kolbens entlang der Einbringrichtung auf. Die kontrollierbare Antriebseinrichtung kann einen, insbesondere doppeltwirkenden, Hydraulikzylinder aufweisen. Alternativ oder zusätzlich kann die kontrollierbare Antriebseinrichtung einen elektrischen Linearantrieb, einen Spindeltrieb oder dergleichen aufweisen. Alternativ oder zusätzlich weist die Einbringungseinrichtung eine Positionserfassungseinrichtung zum, insbesondere stufenlosen oder stufenweisen, Erfassen einer Position des Kolbens, insbesondere der Aufnahme-Endposition sowie - alternativ oder zusätzlich - der Entlüftungszwischenposition sowie - alternativ oder zusätzlich - der Einbring-Endposition, relativ zu dem Gehäuse auf. Insbesondere kann mittels der Positionserfassungseinrichtung erfasst werden, ob sich der Kolben momentan in seiner Aufnahme-Endposition oder in seiner Entlüftungs-Zwischenposition oder in seiner Einbring-Endposition befindet. In Abhängigkeit von der mittels der Positionserfassungseinrichtung erfassten Position des Kolbens kann die Beaufschlagungseinrichtung sowie - alternativ oder zusätzlich - die Entlüftungseinrichtung, insbesondere zwangsgesteuert, kontrolliert werden.

In weiterer Ausgestaltung der Erfindung weist der Kolben eine, insbesondere ringförmig, umlaufende Dichtungseinrichtung zum, insbesondere innenseitig umlaufenden sowie - alternativ oder zusätzlich - selbstverstärkenden, fluiddichten Anlegen an das Gehäuse auf. Insbesondere ist die Dichtungseinrichtung in der Einbring-Endposition sowie in der Entlüftungs-Zwischenposition fluiddicht an dem Gehäuse angelegt.

In weiterer Ausgestaltung der Erfindung weist der Kolben einen Kolbenkörper auf, an welchem die Dichtungseinrichtung umlaufend angeordnet ist. Dabei weist der Kolben einen entlang der Einbringrichtung von dem Kolbenkörper abstehenden, insbesondere gegenüber der Dichtungseinrichtung durchmesserreduzierten und/oder fluiddurchlässigen, Stößel zum Kontaktieren einer mittels des Kolbens verstellbaren Medientrenneinrichtung auf. Insbesondere ist mittels des Stößels eine in Einbringrichtung vor dem Kolbenkörper befindliche Medientrenneinrichtung kontaktierbar. Eine von dem Stößel kontaktierte Medientrenneinrichtung ist wenigstens in der Einbring-Endposition des Kolbens, insbesondere beim wenigstens bereichsweisen Aufschlagen des Gehäuseinnenraums, mit, insbesondere an dem Stößel vorbei- sowie - alternativ oder zusätzlich - durch den Stößel hindurchgeführter, Treibflüssigkeit beaufschlagbar, um die Medientrenneinrichtung in Einbringrichtung von dem Stößel weg vorzutreiben. Mit anderen Worten: Die Treibflüssigkeit kann zum wenigstens bereichsweisen Beaufschlagen des Gehäuseinnenraums insbesondere an dem Stößel vorbeisowie - alternativ oder zusätzlich - durch den Stößel hindurchgeführt werden, um eine von dem Stößel im Abstand zu dem Kolbenkörper kontaktierte Medientrenneinrichtung von dem Kolben weg vorzutreiben. Der Stößel kann entlang der Einbringrichtung durchgängige Ausnehmungen zum Hindurchführen von Treibflüssigkeit aufweisen.

In weiterer Ausgestaltung der Erfindung weist die Einbringungseinrichtung eine Aufnahmeeinrichtung zum Aufnehmen der mittels des Kolbens in den Gehäuseinnenraum hineinführbaren Medientrenneinrichtung auf. Dabei schließt sich die Aufnahmeeinrichtung entgegen der Einbringrichtung an das Gehäuse an. Insbesondere ist die aufzunehmende Medientrenneinrichtung der Aufnahmeeinrichtung quer zu der Einbringrichtung zuführbar. Insbesondere ist die aufzunehmende Medientrenneinrichtung der Aufnahmeeinrichtung ausschließlich zuführbar, wenn sich der Kolben in seiner Aufnahme-Endposition befindet. Zeitlich nach dem Aufnehmen der Medientrenneinrichtung mittels der Aufnahmeeinrichtung kann die aufgenommene Medientrenneinrichtung mittels des Kolbens in den Gehäuseinnenraum hineingeführt, insbesondere hineingezwängt, werden.

Zweckmäßig kann die Aufnahmeeinrichtung eine, insbesondere sensorüberwachte, Luke zum Verschließen einer Zuführöffnung der Aufnahmeeinrichtung aufweisen, wobei die Zuführöffnung zum Zuführen der aufzunehmenden Medientrenneinrichtung ausgebildet ist und/oder dient.

In weiterer Ausgestaltung der Erfindung weist die Einbringungseinrichtung eine, insbesondere elektronische, Kontrolleinrichtung zum, insbesondere automatischen, Einbringen der Medientrenneinrichtung in die Dickstoff-Förderleitung auf. Dabei ist die Kontrolleinrichtung mit der kontrollierbaren Beaufschlagungseinrichtung, insbesondere mit einer kontrollierbaren Ventileinrichtung der Beaufschlagungseinrichtung, sowie - alternativ oder zusätzlich - mit der kontrollierbaren Antriebseinrichtung der Einbringungseinrichtung sowie - alternativ oder zusätzlich - mit der Sensoreinrichtung der Entlüftungseinrichtung sowie - alternativ oder zusätzlich - mit der Positionserfassungseinrichtung der Einbringungseinrichtung wirkverbunden. Insbesondere ist die Einbringungseinrichtung mittels der Kontrolleinrichtung automatisch betreibbar.

Ein erfindungsgemäßes System weist eine erfindungsgemäße Einbringungseinrichtung wie voranstehend beschrieben auf. Insofern übertragen sich die vorstehend erläuterten Vorteile der erfindungsgemäßen Einbringungseinrichtung auch auf das erfindungsgemäße System mit einer derartigen Einbringungseinrichtung. Das System weist zudem eine Baumaschine zum Fördern von Dickstoff auf. Die Baumaschine weist eine Dickstoff-Förderleitung auf. Die Einbringungseinrichtung ist an die Dickstoff-Förderleitung anschließbar oder angeschlossen, um eine Medientrenneinrichtung in die Dickstoff-Förderleitung, insbesondere automatisch, einzubringen. Das System kann eine kontrollierbare Schiebereinrichtung zum, insbesondere automatischen, Anfügen der Einbringungseinrichtung an die Dickstoff-Förderleitung und/oder zum, insbesondere automatischen, Abtrennen der Einbringungseinrichtung von der Dickstoff-Förderleitung aufweisen. Nachdem die Medientrenneinrichtung in die Dickstoff-Förderleitung mittels der Einbringungseinrichtung eingebracht wurde, kann die Medientrenneinrichtung mittels der Treibflüssigkeit durch die Dickstoff-Förderleitung, insbesondere in der Art eines Freikolbens, vorgetrieben werden, insbesondere um die Dickstoff-Förderleitung unter Verdrängung von in der Dickstoff-Förderleitung befindlichem Dickstoff zu reinigen.

Zweckmäßig ist die Einbringungseinrichtung zur Verwendung in dem System eingerichtet.

Ein erfindungsgemäßes Verfahren dient zum, insbesondere automatischen, Betreiben eines erfindungsgemäßen Systems wie voranstehend beschrieben. Insofern ermöglicht das erfindungsgemäße Verfahren die Ausnutzung der vorstehend erläuterten Vorteile des erfindungsgemäßen Systems. Das Verfahren weist einen Schritt a) auf, gemäß welchem ein Aufnehmen einer Medientrenneinrichtung zwischen dem in seiner Aufnahme-Endposition befindlichen Kolben und dem Gehäuseinnenraum erfolgt. Das Verfahren weist außerdem einen Schritt b) auf, gemäß welchem ein Verstellen des Kolbens bis in seine Entlüftungs-Zwischenposition erfolgt, um die Medientrenneinrichtung in den Gehäuseinnenraum hineinzuführen und den Gehäuseinnenraum der Ausgangsöffnung gegenüberliegend fluiddicht zu verschließen. Das Verfahren weist ferner einen Schritt c) auf, gemäß welchem - wenn sich der Kolben in seiner Entlüftung-Zwischenposition befindet - ein Beaufschlagen wenigstens des Innenraumbereichs des Gehäuseinnenraums zwischen der Medientrenneinrichtung und dem Kolben mit Treibflüssigkeit erfolgt, um wenigstens den Innenraumbereich mittels der Entlüftungseinrichtung zu entlüften. Zudem weist das Verfahren einen Schritt d) auf, gemäß welchem - wenn wenigstens der Innenraumbereich des Gehäuseinnenraums entlüftet ist - ein Verstellen des Kolbens in seine Einbring-Endposition erfolgt, um die Entlüftungseinrichtung mittels des Kolbens innerhalb des Gehäuseinnenraums von der Beaufschlagungseinrichtung fluiddicht derart zu trennen, dass die Medientrenneinrichtung mittels der Treibflüssigkeit in Einbringrichtung in der Dickstoff-Förderleitung von der Einbringungseinrichtung weg vorgetrieben wird.

### KURZBESCHREIBUNG DER ZEICHNUNGEN

Weitere Vorteile und Merkmale der Erfindung ergeben sich aus den Ansprüchen sowie aus der nachfolgenden Beschreibung eines bevorzugten Ausführungsbeispiels der Erfindung, welches anhand der Zeichnungen dargestellt ist. Dabei beziehen sich gleiche Bezugszeichen auf gleiche oder ähnliche oder funktional gleiche Bauteile.

Es versteht sich, dass die vorstehend genannten und die nachstehend noch zu erläuternden Merkmale nicht nur in der jeweils angegeben Kombination, sondern auch in anderen Kombinationen oder ein Alleinstellung verwendbar sind, ohne den Rahmen der vorliegenden Erfindung zu verlassen, wobei die Erfindung nur durch die beigefügten Ansprüche definiert ist.
- Fig. 1: zeigt in schematischer Perspektivdarstellung eine Ausführungsform eines erfindungsgemäßen Systems mit einer Ausführungsform einer erfindungsgemäßen Einbringungseinrichtung,
- Fig. 2: in schematischer Darstellung eines quer zu einer Einbringrichtung geführten Schnitts die Einbringungseinrichtung nach Fig. 1,
- Fig. 3: in schematischer Darstellung eines entlang der Einbringrichtung geführten Schnitts die Einbringungseinrichtung nach den Fig. 1 und 2 mit einem in seiner Aufnahmeendposition befindlichen Kolben,
- Fig. 4: in schematischer Darstellung eines entlang der Einbringrichtung geführten Schnitts ein Detail der Einbringungseinrichtung nach den Fig. 1 bis 3 bei in seiner Entlüftungs-Zwischenposition befindlichem Kolben,
- Fig. 5: in schematischer Darstellung eines entlang der Einbringrichtung geführten Schnitts ein Detail der Einbringungseinrichtung nach den Fig. 1 bis 4 bei in seiner Einbring-Endposition befindlichem Kolben, und

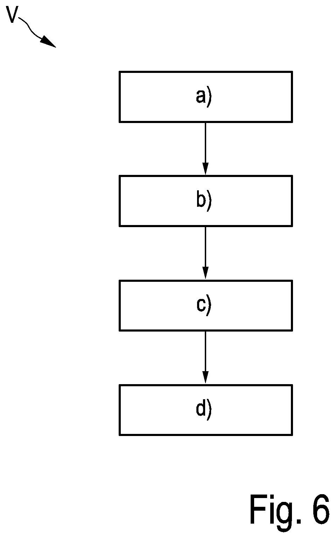

- Fig. 6: ein Ablaufschaubild für ein erfindungsgemäß ausgeführtes Verfahrens zum, insbesondere automatischen, Betreiben des Systems nach Fig. 1.

### DETAILLIERTE BESCHREIBUNG DES AUSFÜHRUNGSBEISPIELS

Eine erfindungsgemäße Einbringungseinrichtung 1 ist zum Einbringen einer Medientrenneinrichtung M in eine Dickstoff-Förderleitung 51 einer Baumaschine 50 zum Fördern von Dickstoff D vorgesehen. Die Medientrenneinrichtung M kann wenigstens einen Rohrleitungsmolch aufweisen. Die Medientrenneinrichtung M kann mehrere Rohrleitungsmolche aufweisen, die als Molchpaket nebeneinander angeordnet sind. Die Medientrenneinrichtung M bzw. das Molchpaket kann ein Papierknäuel, insbesondere aus einem zusammengeknäulten Baustoffsack, aufweisen.

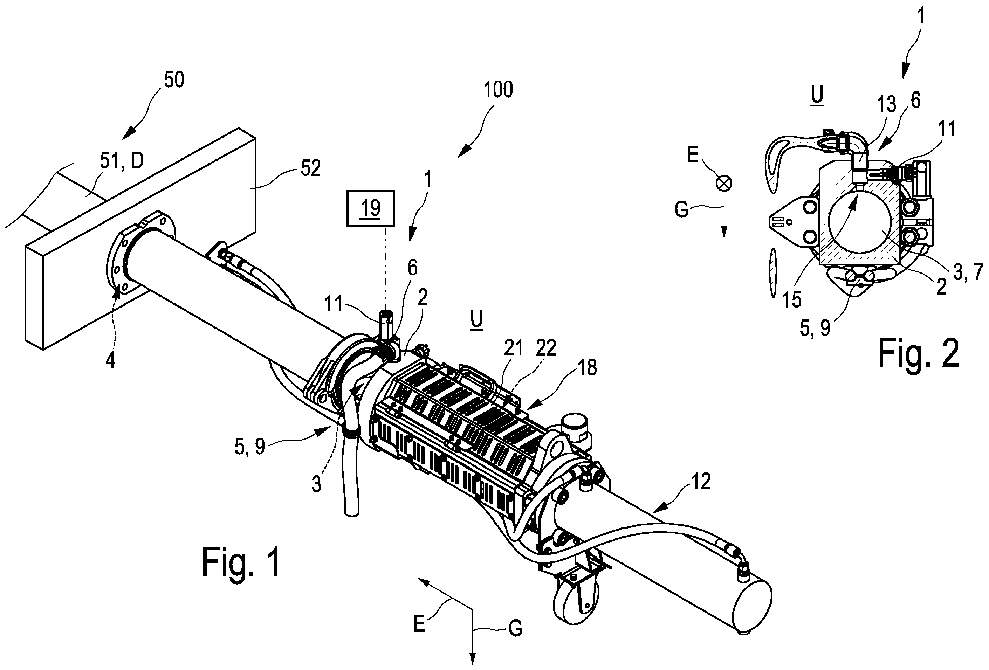

Die Einbringungseinrichtung 1 ist beispielsweise Bestandteil eines erfindungsgemäßen Systems 100. Die Einbringungseinrichtung 1 kann also in dem System 100 verwendet werden. Das System 100 weist zudem die Baumaschine 50 zum Fördern von Dickstoff D auf, welche die Dickstoff-Förderleitung 51 umfasst. Dabei ist die Einbringungseinrichtung 1 des Systems 100 an die Dickstoff-Förderleitung 51 anschließbar oder - wie in Fig. 1 gezeigt - angeschlossen, um eine Medientrenneinrichtung M in die Dickstoff-Förderleitung 51, insbesondere automatisch, einzubringen.

Die Einbringungseinrichtung 1 weist ein Gehäuse 2 auf. Das Gehäuse 2 weist einen Gehäuseinnenraum 3 auf. Der Gehäuseinnenraum 3 ist zum Hindurchführen einer in die Dickstoff-Förderleitung 51 einbringbaren Medientrenneinrichtung M entlang einer Einbringrichtung E der Einbringungseinrichtung 1 ausgebildet. Insbesondere ist der Gehäuseinnenraum 3 hohlzylindrisch axial entlang der Einbringrichtung E erstreckt.

Die Einbringungseinrichtung 1 weist außerdem eine den Gehäuseinnenraum 3 in der Einbringrichtung E öffnende Ausgangsöffnung 4 auf. Dabei ist der Gehäuseinnenraum 3 mittels der Ausgangsöffnung 4 derart in der Einbringrichtung E geöffnet, dass eine in dem Gehäuseinnenraum 3 befindliche Medientrenneinrichtung M durch die Ausgangsöffnung 4 hindurch aus der Einbringungseinrichtung 1 heraus in die Dickstoff-Förderleitung 51 hinein einbringbar ist. Die Ausgangsöffnung 4 kann zum Anfügen an die Dickstoff-Förderleitung 51 ausgebildet sein.

Die Einbringungseinrichtung 1 weist ferner eine kontrollierbare Beaufschlagungseinrichtung 5 auf. Die Beaufschlagungseinrichtung 5 ist zum wenigstens bereichsweisen Beaufschlagen des Gehäuseinnenraums 3 mit einer Treibflüssigkeit T eingerichtet. Die Treibflüssigkeit T ist zum Vortreiben einer in Einbringrichtung E in die Dickstoff-Förderleitung 51 hinein einzubringenden sowie - alternativ oder zusätzlich - bereits eingebrachten Medientrenneinrichtung M von der Einbringungseinrichtung 1 weg mittels der Beaufschlagungseinrichtung 5 in den Gehäuseinnenraum 3 hineinführbar.

Die Einbringungseinrichtung 1 weist darüber hinaus eine Entlüftungseinrichtung 6 auf. Die Entlüftungseinrichtung 6 dient zum Entlüften wenigstens eines Innenraumbereichs 7 des Gehäuseinnenraums 3 bei dem wenigstens bereichsweisen Beaufschlagen mit Treibflüssigkeit T. Beispielsweise kann der Innenraumbereich 7 des Gehäuseinnenraums 3 mittels der Entlüftungseinrichtung 6 entlüftet werden, wobei der Innenraumbereich 7 mittels der Beaufschlagungseinrichtung 5 mit Treibflüssigkeit T beaufschlagbar ist, um die Medientrenneinrichtung M von der Einbringungseinrichtung 1 weg vorzutreiben.

Die Treibflüssigkeit T kann Frischwasser oder Brauchwasser oder ein Gemisch aus Frischwasser und Brauchwasser sein.

Die Einbringungseinrichtung 1 weist außerdem einen Kolben 8 auf. Dabei ist der Kolben 8 relativ zu dem Gehäuse 2 in der Einbringrichtung E verstellbar. Der Kolben 8 ist relativ zu dem Gehäuse 2 in der Einbringrichtung E verstellbar, um eine in Einbringrichtung E vor dem Kolben 8 befindliche Medientrenneinrichtung M relativ zu dem Gehäuse 2 zu verstellen. Die in Einbringrichtung E vor dem Kolben 8 befindliche Medientrenneinrichtung M kann also mittels des Kolbens 8 relativ zu dem Gehäuse 2, insbesondere durch den Gehäuseinnenraum 3 hindurch und aus dem Gehäuseinnenraum 3 heraus, verschoben werden.

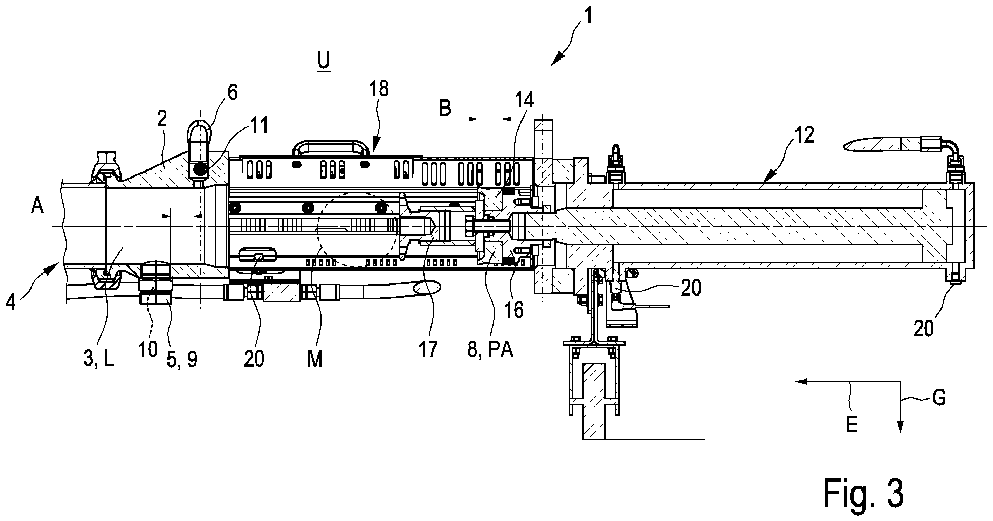

Der Kolben 8 weist eine Aufnahme-Endposition PA auf, gezeigt in Fig. 3. In der Aufnahme-Endposition PA ist der Kolben 8 entgegen der Einbringrichtung E von dem Gehäuse 2 derart entfernt, dass zwischen dem Kolben 8 und dem Gehäuseinnenraum 3 eine mittels des Kolbens 8 in den Gehäuseinnenraum 3 hineinführbare Medientrenneinrichtung M aufnehmbar ist. In der Aufnahme-Endposition PA ist der Kolben 8 beispielsweise in einem Abstand zu dem Gehäuseinnenraum 3 angeordnet.

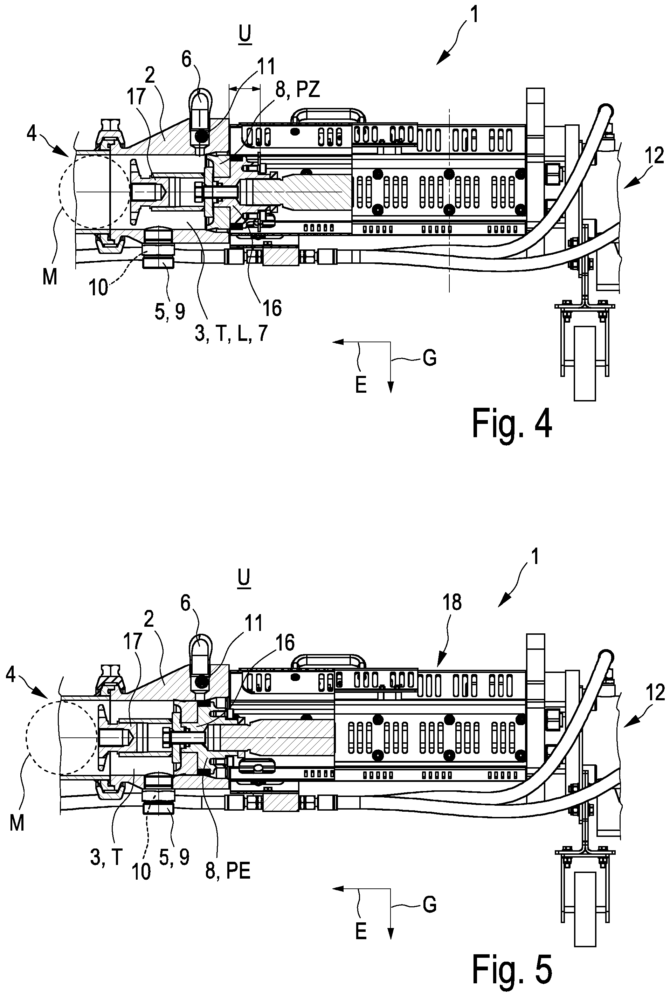

Der Kolben 8 weist außerdem eine Entlüftungs-Zwischenposition PZ auf, gezeigt in Fig. 4. In der Entlüftungs-Zwischenposition PZ sind die Beaufschlagungseinrichtung 5 und die Entlüftungseinrichtung 6 mittels des Gehäuseinnenraums 3 miteinander fluidleitend verbunden. Zudem ist der Gehäuseinnenraum 3 an einem der Ausgangsöffnung 4 entgegen der Einbringrichtung E gegenüberliegenden Ende des Gehäuseinnenraums 3 mittels des Kolbens 8 fluiddicht verschlossen.

Ferner weist der Kolben 8 eine Einbring-Endposition PE auf, gezeigt in Fig. 5. In der Einbring-Endposition PE trennt der Kolben 8 innerhalb des Gehäuseinnenraums 3 die Beaufschlagungseinrichtung 5 fluiddicht von der Entlüftungseinrichtung 6.

Der Kolben 8 kann in Einbringrichtung E von seiner Aufnahme-Endposition PA ausgehend über seine Entlüftungs-Zwischenposition PZ in seine Einbring-Endposition PE verstellbar sein. Zudem kann der Kolben 8 entgegen der Einbringrichtung E von seiner Einbring-Endposition PE ausgehend über die Entlüftungs-Zwischenposition PZ in seine Aufnahme-Endposition PA zurückverstellbar sein.

Das System 100 kann eine kontrollierbare Schiebereinrichtung 52 aufweisen. Mittels der Schiebereinrichtung 52 kann die Einbringungseinrichtung 1, insbesondere automatisch, an die Dickstoff-Förderleitung 51 anfügbar und von der Dickstoff-Förderleitung 51, insbesondere dickstoffleitend, abtrennbar sein.

Beispielsweise weist die Beaufschlagungseinrichtung 5 einen Fluidkanal 10 auf. Der Fluidkanal 10 ist zum Durchfließen mit Treibflüssigkeit T ausgebildet. Dabei mündet der Fluidkanal 10 vorliegend in den Gehäuseinnenraum 3. Der Fluidkanal 10 kann quer zu der Einbringrichtung E sowie - alternativ oder zusätzlich - entgegen einer Schwerkraftrichtung G in den Gehäuseinnenraum 3 münden. Vorliegend mündet der Fluidkanal 10 senkrecht zu der Einbringrichtung E und entgegen der Schwerkraftrichtung G in den Gehäuseinnenraum 3.

Die Entlüftungseinrichtung 6 weist beispielsweise eine Sensoreinrichtung 11 auf. Die Sensoreinrichtung 11 ist vorliegend zur Detektion von Treibflüssigkeit T ausgebildet. Dabei kann die Sensoreinrichtung 11 zur Detektion von Treibflüssigkeit T ausgebildet sein, die die Entlüftungseinrichtung 6 benetzt. Alternativ oder zusätzlich kann die Sensoreinrichtung 11 zur Detektion von Treibflüssigkeit T ausgebildet sein, die in sowie - alternativ oder zusätzlich - durch die Entlüftungseinrichtung 6 fließt.

Die kontrollierbare Beaufschlagungseinrichtung 5 weist vorliegend eine kontrollierbare Ventileinrichtung 9 auf. Dabei ist die Ventileinrichtung 9 kontrollabhängig von Treibflüssigkeit T zur wenigstens bereichsweisen Beaufschlagung des Gehäuseinnenraums 3 durchfließbar. Insbesondere ist die wenigstens bereichsweise Beaufschlagung des Gehäuseinnenraums 3 mit Treibflüssigkeit T mittels der kontrollierbaren Ventileinrichtung 9 kontrollierbar, insbesondere steuerbar.

Die Entlüftungseinrichtung 6 ist vorliegend von dem Gehäuseinnenraum 3 abgewandt mit einer äußeren Umgebung U der Einbringungseinrichtung 1 fluidleitend verbunden. Beispielsweise kann Luft L aus dem Gehäuseinnenraum 3 mittels der Entlüftungseinrichtung 6 in die äußere Umgebung U abgeführt werden. Die abzuführende Luft L kann mittels Treibflüssigkeit T aus dem Innenraumbereich 7 verdrängt werden, wenn der Innenraumbereich 7 mit Treibflüssigkeit T beaufschlagt wird. Die Entlüftungseinrichtung 6 weist vorliegend einen Entlüftungskanal 13 auf, der zum Durchfließen mit Luft L ausgebildet ist. Dabei mündet der Entlüftungskanal 13 in den Gehäuseinnenraum 3. Von dem Gehäuseinnenraum 3 abgewandt kann der Entlüftungskanal 13 in die äußere Umgebung U münden. Der Entlüftungskanal 13 kann quer zu der Einbringrichtung E sowie - alternativ oder zusätzlich - in Schwerkraftrichtung G in den Gehäuseinnenraum 3 münden. Es ist denkbar, dass der Entlüftungskanal 13 unter einem Winkel von beispielsweise +/- 15° bezüglich der Schwerkraftrichtung G oben an dem Gehäuse 2 in den Gehäuseinnenraum 3 mündet. Vorliegend mündet der Entlüftungskanal 13 aber senkrecht zu der Einbringrichtung E und in Schwerkraftrichtung G in den Gehäuseinnenraum 3.

Der Fluidkanal 10 und der Entlüftungskanal 13 münden vorliegend zueinander in einem Abstand A bezüglich der Einbringrichtung E in den Gehäuseinnenraum 3. Der Abstand A kann parallel zur Einbringrichtung E gemessen sein. Dabei kann eine, insbesondere axiale, Erstreckung B einer Dichtungseinrichtung 14 des Kolbens 8 bezüglich der Einbringrichtung E höchstens so groß sein wie der Abstand A. Die Erstreckung B kann parallel zu dem Abstand A gemessen sein.

Die Dichtungseinrichtung 14 des Kolbens 8 ist vorliegend umlaufend um die Einbringrichtung E ausgebildet. Die Dichtungseinrichtung 14 kann ringförmig umlaufend ausgebildet sein. Dabei ist die Dichtungseinrichtung 14 beispielsweise zum innenseitig umlaufenden sowie - alternativ oder zusätzlich - selbstverstärkenden fluiddichten Anlegen an das Gehäuse 2 ausgebildet. Die Dichtungseinrichtung 14 kann also an einer den Gehäuseinnenraum 3 teilweise begrenzenden Innenseite des Gehäuses 2 fluiddicht anlegbar sein. Die Dichtungseinrichtung 14 ist beispielsweise in der Einbring-Endposition PE sowie in der Entlüftungs-Zwischenposition PZ, insbesondere und dazwischen, fluiddicht an dem Gehäuse 2 angelegt.

Das Gehäuse 2 weist beispielsweise eine Entlüftungsöffnung 15 auf. Mittels der Entlüftungsöffnung 15 kommuniziert der Entlüftungskanal 13 vorliegend fluidleitend mit dem Gehäuseinnenraum 3. In der Einbring-Endposition PE kann die Entlüftungsöffnung 15 mittels des Kolbens 8 fluiddicht verschlossen sein. Vorliegend ist die Entlüftungsöffnung 15 ausschließlich fluiddicht mittels des Kolbens 8 verschlossen, wenn sich der Kolben 8 in seiner Einbring-Endposition PE befindet. Die Entlüftungsöffnung 15 kann einen Innendurchmesser von 5 mm bis 100 mm, insbesondere von 5 mm bis 20 mm, vorliegend von etwa 15 mm, aufweisen.

Die Einbringungseinrichtung 1 weist beispielsweise eine kontrollierbare Antriebseinrichtung 12 auf. Die kontrollierbare Antriebseinrichtung 12 ist vorliegend zum Verstellen des Kolbens 8 entlang der Einbringrichtung E ausgebildet. Dabei kann die Antriebseinrichtung 12 zum linearen Verstellen des Kolbens 8 entlang der Einbringrichtung E ausgebildet sein.

Die Einbringungseinrichtung 1 weist beispielsweise eine Positionserfassungseinrichtung 20 auf. Die Positionserfassungseinrichtung 20 ist vorliegend zum Erfassen einer Position des Kolbens 8 ausgebildet. Beispielsweise kann die Positionserfassungseinrichtung 20 zum Erfassen der Aufnahme-Endposition PA ausgebildet sein. Alternativ oder zusätzlich kann die Positionserfassungseinrichtung 20 zum Erfassen der Entlüftungs-Zwischenposition PZ ausgebildet sein. Alternativ oder zusätzlich kann die Positionserfassungseinrichtung 20 zum Erfassen der Einbring-Endposition PE ausgebildet sein. Vorliegend ist die Positionserfassungseinrichtung 20 zum Erfassen der Aufnahme-Endposition PA und zum Erfassen der Entlüftungs-Zwischenposition PZ und zum Erfassen der Einbring-Endposition PE des Kolbens 8 relativ zu dem Gehäuse 2 ausgebildet.

Der Kolben 8 weist beispielsweise einen Kolbenkörper 16 auf. An dem Kolbenkörper 16 ist die Dichtungseinrichtung 14 des Kolbens 8 umlaufend angeordnet. Dabei hat der Kolben 8 einen entlang der Einbringrichtung E von dem Kolbenkörper 16 abstehenden Stößel 17. Vorliegend steht der Stößel 17 in der Einbringrichtung E von dem Kolbenkörper 16 ab. Der Stößel 17 dient vorliegend zum Kontaktieren einer mittels des Kolbens 8 verstellbaren Medientrenneinrichtung M. Dabei ist eine von dem Stößel 17 kontaktierte Medientrenneinrichtung M wenigstens in der Einbring-Endposition PE des Kolbens 8 mit Treibflüssigkeit T beaufschlagbar, um die Medientrenneinrichtung M in Einbringrichtung E von dem Stößel 17 weg vorzutreiben. Beispielsweise kann die von dem Stößel 17 kontaktierte Medientrenneinrichtung M bei dem wenigstens bereichsweisen Beaufschlagen des Gehäuseinnenraums 3 mit Treibflüssigkeit T beaufschlagbar sein. Insbesondere kann die von dem Stößel 17 kontaktierte Medientrenneinrichtung M mit Treibflüssigkeit T beaufschlagt werden, die an dem Stößel 17 vorbei- sowie - alternativ oder zusätzlich - durch den Stößel 17 hindurchgeführt wird. Vorliegend ist die Treibflüssigkeit T an dem Stößel 17 vorbei- und durch den Stößel 17 hindurchführbar, um die von dem Stößel 17 kontaktierte Medientrenneinrichtung M zu beaufschlagen.

Die Einbringungseinrichtung 1 weist vorliegend eine Aufnahmeeinrichtung 18 auf. Die Aufnahmeeinrichtung 18 dient zum Aufnehmen der mittels des Kolbens 8 in den Gehäuseinnenraum 3 hineinführbaren Medientrenneinrichtung M. Dabei schließt sich die Aufnahmeeinrichtung 18 entgegen der Einbringrichtung E an das Gehäuse 2 und/oder an den Gehäuseinnenraum 3 an. Vorliegend ist die Aufnahmeeinrichtung 18 der Ausgangsöffnung 4 gegenüberliegend an das Gehäuse 2 angeschlossen. Die mittels der Aufnahmeeinrichtung 18 aufzunehmende Medientrenneinrichtung M ist der Aufnahmeeinrichtung 18 beispielsweise quer zu der Einbringrichtung E zuführbar, wenn sich der Kolben 8 in seiner Aufnahme-Endposition PA befindet. Vorliegend ist die Medientrenneinrichtung M der Aufnahmeeinrichtung 18 ausschließlich zuführbar, wenn sich der Kolben 8 in seiner Aufnahme-Endposition PA befindet.

Die Aufnahmeeinrichtung 18 kann eine, beispielsweise sensorüberwachte, Luke 21 zum Verschließen einer Zuführöffnung 22 der Aufnahmeeinrichtung 18 aufweisen. Die Zuführöffnung 22 kann zum Zuführen der aufzunehmenden Medientrenneinrichtung M durch die Zuführöffnung 22 hindurch ausgebildet sein.

Beispielsweise weist die Einbringungseinrichtung 1 eine Kontrolleinrichtung 19 auf. Die Kontrolleinrichtung 19 ist vorliegend zum, insbesondere automatischen, Einbringen der Medientrenneinrichtung M in die Dickstoff-Förderleitung 51 ausgebildet. Dabei ist die Kontrolleinrichtung 19 beispielsweise mit der kontrollierbaren Beaufschlagungseinrichtung 5, vorliegend mit der kontrollierbaren Ventileinrichtung 9 der Beaufschlagungseinrichtung 5, wirkverbunden. Alternativ oder zusätzlich ist die Kontrolleinrichtung 19 mit der kontrollierbaren Antriebseinrichtung 12 wirkverbunden. Alternativ oder zusätzlich ist die Kontrolleinrichtung 19 mit der Sensoreinrichtung 11 der Entlüftungseinrichtung 6 wirkverbunden. Alternativ oder zusätzlich ist die Kontrolleinrichtung 19 mit der Positionserfassungseinrichtung 20 wirkverbunden.

Nachdem die Medientrenneinrichtung M in die Dickstoff-Förderleitung 51 eingebracht wurde, kann die Medientrenneinrichtung M mittels der Treibflüssigkeit T durch die Dickstoff-Förderleitung 51, insbesondere in der Art eines Freikolbens, vorgetrieben werden. Infolge des Vortreibens der Medientrenneinrichtung M durch die Dickstoff-Förderleitung 51 kann in der Dickstoff-Förderleitung 51 der Treibflüssigkeit T gegenüberliegend vorhandener Dickstoff D verdrängt werden, um die Dickstoff-Förderleitung 51 zu reinigen.

Ein erfindungsgemäßes Verfahren V dient zum Betreiben des Systems 100. Beispielsweise ist das System 100 gemäß dem Verfahren V automatisch betreibbar. Dabei weist das Verfahren einen Schritt a) auf, gemäß welchem eine Medientrenneinrichtung M zwischen dem in seiner Aufnahme-Endposition PA befindlichen Kolben 8 und dem Gehäuseinnenraum 3 aufgenommen wird.

Das Verfahren V weist außerdem einen Schritt b) auf, gemäß welchem der Kolben 8 bis in seine Entlüftungs-Zwischenposition PZ verstellt wird, so dass die Medientrenneinrichtung M in den Gehäuseinnenraum 3 hineingeführt und der Gehäuseinnenraum 3 der Ausgangsöffnung 4 gegenüberliegend fluiddicht mittels des Kolbens 8 verschlossen wird.

Das Verfahren V weist ferner einen Schritt c) auf, gemäß welchem - wenn sich der Kolben 8 in seiner Entlüftungs-Zwischenposition PZ befindet - wenigstens der Innenraumbereich 7 des Gehäuseinnenraums 3 zwischen der Medientrenneinrichtung M und dem Kolben 8 mit Treibflüssigkeit T beaufschlagt wird, um wenigstens den Innenraumbereich 7 mittels der Entlüftungseinrichtung 6 zu entlüften. Der Innenraumbereich 7 kann im Wesentlichen treibflüssigkeitsdicht einerseits mittels der Medientrenneinrichtung M und andererseits mittels des Kolbens 8 begrenzt sein.

Zudem weist das Verfahren V einen Schritt d) auf, gemäß welchem - wenn wenigstens der Innenraumbereich 7 des Gehäuseinnenraums 3 entlüftet ist - der Kolben 8 in seine Einbring-Endposition PE verstellt wird, so dass die Entlüftungseinrichtung 6 mittels des Kolbens 8 innerhalb des Gehäuseinnenraums 3 von der Beaufschlagungseinrichtung 5 fluiddicht derart getrennt wird, dass die Medientrenneinrichtung M mittels der Treibflüssigkeit T in Einbringrichtung E in der Dickstoff-Förderleitung 51 von der Einbringungseinrichtung 1 weg vorgetrieben wird.

## Patentansprüche

1. Einbringungseinrichtung (1) zum Einbringen einer Medientrenneinrichtung (M) in eine Dickstoff-Förderleitung (51) einer Baumaschine (50) zum Fördern von Dickstoff (D), wobei die Einbringungseinrichtung (1) aufweist:
- ein Gehäuse (2), welches einen Gehäuseinnenraum (3) zum Hindurchführen der in die Dickstoff-Förderleitung (51) einbringbaren Medientrenneinrichtung (M) entlang einer Einbringrichtung (E) der Einbringungseinrichtung (1) aufweist,
- eine den Gehäuseinnenraum (3) in Einbringrichtung (E) öffnende Ausgangsöffnung (4) derart, dass die in dem Gehäuseinnenraum (3) befindliche Medientrenneinrichtung (M) durch die Ausgangsöffnung (4) hindurch aus der Einbringungseinrichtung (1) heraus in die Dickstoff-Förderleitung (51) einbringbar ist,
- eine kontrollierbare Beaufschlagungseinrichtung (5) zum wenigstens bereichsweisen Beaufschlagen des Gehäuseinnenraums (3) mit einer Treibflüssigkeit (T) zum Vortreiben der in Einbringrichtung (E) in die Dickstoff-Förderleitung (51) einzubringenden und/oder eingebrachten Medientrenneinrichtung (M) von der Einbringungseinrichtung (1) weg,
- eine Entlüftungseinrichtung (6) zum Entlüften wenigstens eines Innenraumbereichs (7) des Gehäuseinnenraums (3) beim wenigstens bereichsweisen Beaufschlagen mit Treibflüssigkeit (T), und
- einen Kolben (8), wobei der Kolben (8) relativ zu dem Gehäuse (2) in der Einbringrichtung (E) verstellbar ist, um die in Einbringrichtung (E) vor dem Kolben (8) befindliche Medientrenneinrichtung (M) relativ zu dem Gehäuse (2) zu verstellen,
- wobei der Kolben (8) eine Aufnahme-Endposition (PA) aufweist, in welcher er entgegen der Einbringrichtung (E) von dem Gehäuse (2) derart entfernt ist, dass zwischen dem Kolben (8) und dem Gehäuseinnenraum (3) die mittels des Kolbens (8) in den Gehäuseinnenraum (3) hineinführbare Medientrenneinrichtung (M) aufnehmbar ist,
- wobei der Kolben (8) eine Entlüftungs-Zwischenposition (PZ) aufweist, in welcher die Beaufschlagungseinrichtung (5) und die Entlüftungseinrichtung (6) mittels des Gehäuseinnenraums (3) miteinander fluidleitend verbunden sind und in welcher der Gehäuseinnenraum (3) der Ausgangsöffnung (4) entgegen der Einbringrichtung (E) gegenüberliegend mittels des Kolbens (8) fluiddicht verschlossen ist,
- wobei der Kolben (8) eine Einbring-Endposition (PE) aufweist, in welcher er innerhalb des Gehäuseinnenraums (3) die Beaufschlagungseinrichtung (5) fluiddicht von der Entlüftungseinrichtung (6) trennt.

2. Einbringungseinrichtung (1) nach dem vorhergehenden Anspruch,
- wobei die Beaufschlagungseinrichtung (5) einen Fluidkanal (10) zum Durchfließen mit Treibflüssigkeit (T) aufweist,
- wobei der Fluidkanal (10), insbesondere quer zu der Einbringrichtung (E) und/oder entgegen einer Schwerkraftrichtung (G), in den Gehäuseinnenraum (3) mündet.

3. Einbringungseinrichtung (1) nach einem der vorhergehenden Ansprüche,
- wobei die Entlüftungseinrichtung (6) eine Sensoreinrichtung (11) zur Detektion von, insbesondere die Entlüftungseinrichtung (6) benetzender und/oder in und/oder durch die Entlüftungseinrichtung (6) fließender, Treibflüssigkeit (T) aufweist.

4. Einbringungseinrichtung (1) nach einem der vorhergehenden Ansprüche,
- wobei die kontrollierbare Beaufschlagungseinrichtung (5) eine kontrollierbare Ventileinrichtung (9) aufweist, die kontrollabhängig von Treibflüssigkeit (T) zur wenigstens bereichsweisen Beaufschlagung des Gehäuseinnenraums (3) durchfließbar ist.

5. Einbringungseinrichtung (1) nach einem der vorhergehenden Ansprüche,
- wobei die Entlüftungseinrichtung (6) von dem Gehäuseinnenraum (3) abgewandt mit einer äußeren Umgebung (U) der Einbringungseinrichtung (1) fluidleitend kommuniziert.

6. Einbringungseinrichtung (1) nach einem der vorhergehenden Ansprüche,
- wobei die Entlüftungseinrichtung (6) einen Entlüftungskanal (13) zum Durchfließen mit Luft (L) aufweist,
- wobei der Entlüftungskanal (13), insbesondere quer zu der Einbringrichtung (E) und/oder in einer Schwerkraftrichtung (G), in den Gehäuseinnenraum (3) mündet.

7. Einbringungseinrichtung (1) zumindest nach Anspruch 2,
- wobei der Fluidkanal (10) der Beaufschlagungseinrichtung und der Entlüftungskanal (13) zueinander in einem Abstand (A) bezüglich der Einbringrichtung (E) in den Gehäuseinnenraum (3) münden,
- insbesondere wobei der Abstand (A) wenigstens so groß ist wie eine Erstreckung (B) einer Dichtungseinrichtung (14) des Kolbens (8) bezüglich der Einbringrichtung (E).

8. Einbringungseinrichtung (1) nach einem der beiden vorhergehenden Ansprüche,
- wobei das Gehäuse (2) eine Entlüftungsöffnung (15) aufweist, mittels welcher der Entlüftungskanal (13) und der Gehäuseinnenraum (3) fluidleitend miteinander kommunizieren,
- wobei der Kolben (8), insbesondere ausschließlich, in seiner Einbring-Endposition (PE) die Entlüftungsöffnung (15) fluiddicht verschließt.

9. Einbringungseinrichtung (1) nach einem der vorhergehenden Ansprüche,
- wobei die Einbringungseinrichtung (1) eine kontrollierbare Antriebseinrichtung (12) zum, insbesondere linearen, Verstellen des Kolbens (8) entlang der Einbringrichtung (E) aufweist; und/oder
- wobei die Einbringungseinrichtung (1) eine Positionserfassungseinrichtung (20) zum Erfassen einer Position des Kolbens (8), insbesondere der Aufnahme-Endposition (PA) und/oder der Entlüftungs-Zwischenposition (PZ) und/oder der Einbring-Endposition (PE), relativ zu dem Gehäuse (2) aufweist.

10. Einbringungseinrichtung (1) nach einem der vorhergehenden Ansprüche,
- wobei der Kolben (8) eine, insbesondere ringförmig, umlaufende Dichtungseinrichtung (14) zum, insbesondere innenseitig umlaufenden und/oder selbstverstärkenden, fluiddichten Anlegen an das Gehäuse (2) aufweist,
- insbesondere wobei die Dichtungseinrichtung (14) in der Einbring-Endposition (PE) sowie in der Entlüftungs-Zwischenposition (PZ) fluiddicht an dem Gehäuse (2) angelegt ist.

11. Einbringungseinrichtung (1) nach dem vorhergehenden Anspruch,
- wobei der Kolben (8) einen Kolbenkörper (16) aufweist, an welchem die Dichtungseinrichtung (14) umlaufend angeordnet ist,
- wobei der Kolben (8) einen entlang der Einbringrichtung (E) von dem Kolbenkörper (16) abstehenden Stößel (17) zum Kontaktieren der mittels des Kolbens (8) verstellbaren Medientrenneinrichtung (M) aufweist,
- wobei die von dem Stößel (17) kontaktierte Medientrenneinrichtung (M) wenigstens in der Einbring-Endposition (PE) des Kolbens (8), insbesondere beim wenigstens bereichsweisen Beaufschlagen des Gehäuseinnenraums (3), mit, insbesondere an dem Stößel (17) vorbei und/oder durch den Stößel (17) hindurch geführter, Treibflüssigkeit (T) beaufschlagbar ist, um die Medientrenneinrichtung (M) in Einbringrichtung (E) von dem Stößel (17) weg vorzutreiben.

12. Einbringungseinrichtung (1) nach einem der vorhergehenden Ansprüche,
- wobei die Einbringungseinrichtung (1) eine Aufnahmeeinrichtung (18) zum Aufnehmen der mittels des Kolbens (8) in den Gehäuseinnenraum (3) hineinführbaren Medientrenneinrichtung (M) aufweist,
- wobei die Aufnahmeeinrichtung (18) sich entgegen der Einbringrichtung (E) an das Gehäuse (2) anschließt,
- insbesondere wobei die aufzunehmende Medientrenneinrichtung (M) der Aufnahmeeinrichtung (18) quer zu der Einbringrichtung (E) zuführbar ist, insbesondere ausschließlich, wenn sich der Kolben (8) in seiner Aufnahme-Endposition (PA) befindet.

13. Einbringungseinrichtung (1) nach einem der vorhergehenden Ansprüche,
- wobei die Einbringungseinrichtung (1) eine Kontrolleinrichtung (19) zum, insbesondere automatischen, Einbringen der Medientrenneinrichtung (M) in die Dickstoff-Förderleitung (51) aufweist,
- wobei die Kontrolleinrichtung (19) mit der kontrollierbaren Beaufschlagungseinrichtung (5), insbesondere mit einer kontrollierbaren Ventileinrichtung (9) der Beaufschlagungseinrichtung (5), und/oder mit einer kontrollierbaren Antriebseinrichtung (12) der Einbringungseinrichtung (1) und/oder mit einer Sensoreinrichtung (11) der Entlüftungseinrichtung (6) und/oder mit einer Positionserfassungseinrichtung (20) der Einbringungseinrichtung (1) wirkverbunden ist.

14. System (100), welches aufweist:
- eine Einbringungseinrichtung (1) nach einem der vorhergehenden Ansprüche,
- eine Baumaschine (50) zum Fördern von Dickstoff (D), wobei die Baumaschine (50) eine Dickstoff-Förderleitung (51) aufweist, und
- wobei die Einbringungseinrichtung (1) an die Dickstoff-Förderleitung (51) anschließbar oder angeschlossen ist, um eine Medientrenneinrichtung (M) in die Dickstoff-Förderleitung (51), insbesondere automatisch, einzubringen.

15. Verfahren (V) zum, insbesondere automatischen, Betreiben eines Systems (100) nach dem vorhergehenden Anspruch, wobei das Verfahren (V) die Schritte aufweist:
a) Aufnehmen einer Medientrenneinrichtung (M) zwischen dem in seiner Aufnahme-Endposition (PA) befindlichen Kolben (8) und dem Gehäuseinnenraum (3);
b) Verstellen des Kolbens (8) bis in seine Entlüftungs-Zwischenposition (PZ), um die Medientrenneinrichtung (M) in den Gehäuseinnenraum (3) hineinzuführen und den Gehäuseinnenraum (3) der Ausgangsöffnung (4) gegenüberliegend fluiddicht zu verschließen;
c) wenn sich der Kolben (8) in seiner Entlüftungs-Zwischenposition (PZ) befindet: Beaufschlagen wenigstens des Innenraumbereichs (7) des Gehäuseinnenraums (3) zwischen der Medientrenneinrichtung (M) und dem Kolben (8) mit Treibflüssigkeit (T), um wenigstens den Innenraumbereich (7) mittels der Entlüftungseinrichtung (6) zu entlüften; und
d) wenn wenigstens der Innenraumbereich (7) des Gehäuseinnenraums (3) entlüftet ist: Verstellen des Kolbens (8) in seine Einbring-Endposition (PE), um die Entlüftungseinrichtung (6) mittels des Kolbens (8) innerhalb des Gehäuseinnenraums (3) von der Beaufschlagungseinrichtung (5) fluiddicht derart zu trennen, dass die Medientrenneinrichtung (M) mittels der Treibflüssigkeit (T) in Einbringrichtung (E) in der Dickstoff-Förderleitung (51) von der Einbringungseinrichtung (1) weg vorgetrieben wird.

## Claims

1. Introduction device (1) for introducing a media separation device (M) into a thick-matter conveying line (51) of a construction machine (50) for conveying thick matter (D), the introduction device (1) comprising:
- a housing (2), which has a housing interior (3) for guiding the media separation device (M), which can be introduced into the thick-matter conveying line (51), along an introduction direction (E) of the introduction device (1),
- an outlet opening (4) opening the housing interior (3) in the introduction direction (E) in such a way that the media separation device (M) located in the housing interior (3) can be introduced through the outlet opening (4) from the introduction device (1) into the thick-matter conveying line (51),
- a controllable application device (5) for applying a driving fluid (T) to at least some regions of the housing interior (3) in order to drive the media separation device (M), which is being introduced and/or has been introduced into the thick-matter conveying line (51) in the introduction direction (E), away from the introduction device (1),
- a venting device (6) for venting at least an interior region (7) of the housing interior (3) when applying driving fluid (T) to at least some regions, and
- a piston (8), wherein the piston (8) is movable in the introduction direction (E) relative to the housing (2) in order to move the media separation device (M), which is located in front of the piston (8) in the introduction direction (E), relative to the housing (2),
- wherein the piston (8) has a receiving end position (PA), in which it is removed from the housing (2) counter to the introduction direction (E) in such a way that the media separation device (M), which can be inserted by means of the piston (8) into the housing interior (3), can be received between the piston (8) and the housing interior (3),
- wherein the piston (8) has a venting intermediate position (PZ), in which the application device (5) and the venting device (6) are fluid-conductively connected to each other by means of the housing interior (3) and in which the housing interior (3) is fluid-tightly closed opposite the outlet opening (4) counter to the introduction direction (E) by means of the piston (8),
- wherein the piston (8) has an introduction end position (PE), in which it separates the application device (5) fluid-tightly from the venting device (6) within the housing interior (3).

2. Introduction device (1) according to the preceding claim,
- wherein the application device (5) has a fluid channel (10) for driving fluid (T) to flow through,
- wherein the fluid channel (10) opens into the housing interior (3), in particular transversely to the introduction direction (E) and/or counter to a direction of gravity (G).

3. Introduction device (1) according to either of the preceding claims,
- wherein the venting device (6) has a sensor device (11) for detecting driving fluid (T), which driving fluid is in particular wetting the venting device (6) and/or flowing into and/or through the venting device (6).

4. Introduction device (1) according to any one of the preceding claims,
- wherein the controllable application device (5) has a controllable valve device (9), through which, depending on the control, driving fluid (T) for application to at least some regions of the housing interior (3) can flow.

5. Introduction device (1) according to any one of the preceding claims,
- wherein the venting device (6) facing away from the housing interior (3) communicates fluid-conductively with an external environment (U) of the introduction device (1).

6. Introduction device (1) according to any one of the preceding claims,
- wherein the venting device (6) has a venting channel (13) through which air (L) flows,
- wherein the venting channel (13) opens into the housing interior (3), in particular transversely to the introduction direction (E) and/or in a direction of gravity (G).

7. Introduction device (1) at least according to Claim 2,
- wherein the fluid channel (10) of the application device and the venting channel (13) open into the housing interior (3) at a distance (A) from each other with respect to the introduction direction (E),
- in particular wherein the distance (A) is at least as large as an extent (B) of a sealing device (14) of the piston (8) with respect to the introduction direction (E).

8. Introduction device (1) according to either of the two preceding claims,
- wherein the housing (2) has a venting opening (15), by means of which the venting channel (13) and the housing interior (3) communicate fluid-conductively with each other,
- wherein the piston (8), in particular exclusively in its introduction end position (PE), closes the venting opening (15) fluid-tightly.

9. Introduction device (1) according to any one of the preceding claims,
- wherein the introduction device (1) has a controllable drive device (12) for the, in particular linear, movement of the piston (8) along the introduction direction (E); and/or
- wherein the introduction device (1) has a position detection device (20) for detecting a position of the piston (8), in particular the receiving end position (PA) and/or the venting intermediate position (PZ) and/or the introduction end position (PE), relative to the housing (2).

10. Introduction device (1) according to any one of the preceding claims,
- wherein the piston (8) has an, in particular annularly, encircling sealing device (14) for, in particular internally encircling and/or self-reinforcing, fluid-tight placing onto the housing (2),
- in particular wherein the sealing device (14) is placed fluid-tightly on the housing (2) in the introduction end position (PE) and in the venting intermediate position (PZ).

11. Introduction device (1) according to the preceding claim,
- wherein the piston (8) has a piston body (16) on which the sealing device (14) is arranged in encircling fashion,
- wherein the piston (8) has a ram (17) protruding from the piston body (16) along the introduction direction (E) for contacting the media separation device (M), which is movable by means of the piston (8),
- wherein, at least in the introduction end position (PE) of the piston (8), driving fluid (T) which is guided in particular past the ram (17) and/or through the ram (17) can be applied to the media separation device (M) contacted by the ram (17), in particular during application to at least some regions of the housing interior (3), in order to drive the media separation device (M) away from the ram (17) in the introduction direction (E).

12. Introduction device (1) according to any one of the preceding claims,
- wherein the introduction device (1) has a receiving device (18) for receiving the media separation device (M) which can be introduced into the housing interior (3) by means of the piston (8),
- wherein the receiving device (18) adjoins the housing (2) counter to the introduction direction (E),
- in particular wherein the media separation device (M) to be received can be supplied to the receiving device (18) transversely to the introduction direction (E), in particular exclusively when the piston (8) is in its receiving end position (PA).

13. Introduction device (1) according to any one of the preceding claims,
- wherein the introduction device (1) has a control device (19) for, in particular automatically, introducing the media separation device (M) into the thick-matter conveying line (51),
- wherein the control device (19) is operatively connected to the controllable application device (5), in particular to a controllable valve device (9) of the application device (5), and/or to a controllable drive device (12) of the introduction device (1) and/or to a sensor device (11) of the venting device (6) and/or to a position detection device (20) of the introduction device (1).

14. System (100), which comprises:
- an introduction device (1) according to any one of the preceding claims,
- a construction machine (50) for conveying thick matter (D), the construction machine (50) having a thick-matter conveying line (51), and
- wherein the introduction device (1) is connectable or connected to the thick-matter conveying line (51) in order to introduce a media separation device (M) into the thick-matter conveying line (51), in particular automatically.

15. Method (V) for, in particular automatically, operating a system (100) according to the preceding claim, the method (V) comprising the steps of:
a) receiving a media separation device (M) between the piston (8) in its receiving end position (PA) and the housing interior (3);
b) moving the piston (8) to its venting intermediate position (PZ) in order to insert the media separation device (M) into the housing interior (3) and to close the housing interior (3) fluid-tightly opposite the outlet opening (4);
c) when the piston (8) is in its venting intermediate position (PZ) : applying driving fluid (T) at least to the interior region (7) of the housing interior (3) between the media separation device (M) and the piston (8) in order to vent at least the interior region (7) by means of the venting device (6); and
d) if at least the interior region (7) of the housing interior (3) is vented: moving the piston (8) into its introduction end position (PE) in order to separate the venting device (6) fluid-tightly from the application device (5) within the housing interior (3) by means of the piston (8) in such a way that the media separation device (M) is driven away from the introduction device (1) by means of the driving fluid (T) in the introduction direction (E) in the thick-matter conveying line (51).

## Revendications

1. Dispositif d'introduction (1) destiné à introduire un dispositif de séparation de milieux (M) dans une conduite de transport de matières épaisses (51) d'un engin de chantier (50) destiné à transporter des matières épaisses (D), le dispositif d'introduction (1) comportant :
- un boîtier (2), qui comporte un espace intérieur (3) de boîtier pour le passage du dispositif de séparation de milieux (M) pouvant être introduit dans la conduite de transport de matières épaisses (51) le long d'une direction d'introduction (E) du dispositif d'introduction (1),
- une ouverture de sortie (4) ouvrant l'espace intérieur (3) de boîtier dans la direction d'introduction (E) de telle manière que le dispositif de séparation de milieux (M) se trouvant dans l'espace intérieur (3) de boîtier peut être introduit à travers l'ouverture de sortie (4) hors du dispositif d'introduction (1) dans la conduite de transport de matières épaisses (51),
- un dispositif de sollicitation (5) pouvant être contrôlé destiné à soumettre au moins par endroits l'espace intérieur (3) de boîtier à l'action d'un liquide propulseur (T) pour avancer le dispositif de séparation de milieux (M) à introduire et/ou introduit dans la conduite de transport de matières épaisses (51) dans la direction d'introduction (E) à l'écart du dispositif d'introduction (1),
- un dispositif de ventilation (6) destiné à ventiler au moins une zone (7) d'espace intérieur de l'espace intérieur (3) de boîtier lorsqu'il est soumis au moins par endroits à l'action d'un liquide propulseur (T), et
- un piston (8), le piston (8) pouvant être ajusté par rapport au boîtier (2) dans la direction d'introduction (E) pour ajuster le dispositif de séparation de milieux (M) situé devant le piston (8) dans la direction d'introduction (E) par rapport au boîtier (2),
- le piston (8) comportant une position finale de réception (PA), dans laquelle il est retiré du boîtier (2) dans le sens opposé à la direction d'introduction (E), de telle manière que le dispositif de séparation de milieux (M) pouvant être introduit dans l'espace intérieur (3) de boîtier au moyen du piston (8) peut être reçu entre le piston (8) et l'espace intérieur (3) de boîtier,
- le piston (8) comportant une position de ventilation intermédiaire (PZ), dans laquelle le dispositif de sollicitation (5) et le dispositif de ventilation (6) sont reliés l'un à l'autre en communication fluidique au moyen de l'espace intérieur (3) de boîtier et dans laquelle l'espace intérieur (3) de boîtier est fermé de manière étanche aux fluides au moyen du piston (8) en vis-à-vis de l'ouverture de sortie (4) dans le sens opposé à la direction d'introduction (E),
- le piston (8) comportant une position finale d'introduction (PE), dans laquelle il sépare le dispositif de sollicitation (5) de manière étanche aux fluides du dispositif de ventilation (6) à l'intérieur de l'espace intérieur (3) de boîtier.

2. Dispositif d'introduction (1) selon la revendication précédente,
- le dispositif de sollicitation (5) comportant un canal de fluide (10) destiné à être traversé par le liquide propulseur (T),
- le canal de fluide (10) débouchant dans l'espace intérieur (3) de boîtier, en particulier transversalement à la direction d'introduction (E) et/ou à l'opposé d'une direction de gravité (G).

3. Dispositif d'introduction (1) selon l'une des revendications précédentes,
- le dispositif de ventilation (6) comportant un dispositif de détection (11) pour détecter un liquide propulseur (T), en particulier un liquide propulseur (T) mouillant en particulier le dispositif de ventilation (6) et/ou s'écoulant dans et/ou à travers le dispositif de ventilation (6).

4. Dispositif d'introduction (1) selon l'une des revendications précédentes,
- le dispositif de sollicitation (5) pouvant être contrôlé comportant un dispositif de soupape (9) pouvant être contrôlé, qui peut être traversé, en fonction du contrôle, par du liquide propulseur (T) pour soumettre l'espace intérieur (3) de boîtier à une action au moins par endroits.

5. Dispositif d'introduction (1) selon l'une des revendications précédentes,
- le dispositif de ventilation (6) communiquant en communication fluidique avec un environnement extérieur (U) du dispositif d'introduction (1) de manière opposée à l'espace intérieur (3) de boîtier.

6. Dispositif d'introduction (1) selon l'une des revendications précédentes,
- le dispositif de ventilation (6) comportant un canal de ventilation (13) destiné à être traversé par de l'air (L),
- le canal de ventilation (13) débouchant dans l'espace intérieur (3) de boîtier, en particulier transversalement à la direction d'introduction (E) et/ou dans une direction de gravité (G).

7. Dispositif d'introduction (1) au moins selon la revendication 2,
- le canal de fluide (10) du dispositif de sollicitation et le canal de ventilation (13) débouchant dans l'espace intérieur (3) de boîtier à une distance (A) l'un par rapport à l'autre par rapport à la direction d'introduction (E),
- la distance (A) étant en particulier au moins égale à une extension (B) d'un dispositif d'étanchéité (14) du piston (8) par rapport à la direction d'introduction (E).

8. Dispositif d'introduction (1) selon l'une des deux revendications précédentes,
- le boîtier (2) comportant une ouverture de ventilation (15), au moyen de laquelle le canal de ventilation (13) et l'espace intérieur (3) de boîtier communiquent entre eux en communication fluidique,
- le piston (8) fermant de manière étanche aux fluides l'ouverture de ventilation (15), en particulier exclusivement, dans sa position finale d'introduction (PE).

9. Dispositif d'introduction (1) selon l'une des revendications précédentes,
- le dispositif d'introduction (1) comportant un dispositif d'entraînement (12) pouvant être contrôlé destiné à ajuster, en particulier linéairement, le piston (8) le long de la direction d'introduction (E) ; et/ou
- le dispositif d'introduction (1) comportant un dispositif de détection de position (20) destiné à détecter une position du piston (8), en particulier la position finale de réception (PA) et/ou la position intermédiaire de ventilation (PZ) et/ou la position finale d'introduction (PE), par rapport au boîtier (2).

10. Dispositif d'introduction (1) selon l'une des revendications précédentes,
- le piston (8) comportant un dispositif d'étanchéité périphérique (14), en particulier annulaire, destiné à être placé de manière étanche aux fluides, en particulier en périphérie côté intérieur et/ou de manière autorenforcée, sur le boîtier (2),
- le dispositif d'étanchéité (14) étant en particulier placé de manière étanche aux fluides sur le boîtier (2) dans la position finale d'introduction (PE) ainsi que dans la position intermédiaire de ventilation (PZ).

11. Dispositif d'introduction (1) selon la revendication précédente,
- le piston (8) comportant un corps de piston (16) sur lequel le dispositif d'étanchéité (14) est disposé en périphérie,
- le piston (8) comportant un poussoir (17) dépassant du corps (16) de piston le long de la direction d'introduction (E), destiné à entrer en contact avec le dispositif de séparation de milieux (M) pouvant être ajusté au moyen du piston (8),
- le dispositif de séparation de milieux (M) mis en contact avec le poussoir (17) pouvant être soumis à l'action d'un liquide propulseur (T), en particulier guidé le long du poussoir (17) et/ou à travers le poussoir (17), au moins dans la position finale d'introduction (PE) du piston (8), en particulier lorsque l'espace intérieur (3) du boîtier est soumis à une action au moins par endroits pour avancer le dispositif de séparation de milieux (M) dans la direction d'introduction (E) à l'écart du poussoir (17).

12. Dispositif d'introduction (1) selon l'une des revendications précédentes,
- le dispositif d'introduction (1) comportant un dispositif de réception (18) destiné à recevoir le dispositif de séparation de milieux (M) pouvant être guidé dans l'espace intérieur (3) de boîtier au moyen du piston (8),
- le dispositif de réception (18) se raccordant au boîtier (2) dans le sens opposé à la direction d'introduction (E),
- le dispositif de séparation de milieux (M) à recevoir pouvant en particulier être amené au dispositif de réception (18) transversalement à la direction d'introduction (E), en particulier exclusivement lorsque le piston (8) se trouve dans sa position finale de réception (PA).

13. Dispositif d'introduction (1) selon l'une des revendications précédentes,
- le dispositif d'introduction (1) comportant un dispositif de contrôle (19) destiné à introduire, en particulier automatiquement, le dispositif de séparation de milieux (M) dans la conduite de transport de matières épaisses (51),
- le dispositif de contrôle (19) étant en liaison active avec le dispositif de sollicitation (5) pouvant être contrôlé, en particulier avec un dispositif de soupape (9) pouvant être contrôlé du dispositif de sollicitation (5) et/ou avec un dispositif d'entraînement (12) pouvant être contrôlé du dispositif d'introduction (1) et/ou avec un dispositif de détection (11) du dispositif de ventilation (6) et/ou avec un dispositif de détection de position (20) du dispositif d'introduction (1).

14. Système (100), qui comporte :
- un dispositif d'introduction (1) selon l'une des revendications précédentes,
- un engin de construction (50) destiné à transporter des matières épaisses (D), l'engin de construction (50) comportant une conduite de transport de matières épaisses (51), et
- le dispositif d'introduction (1) pouvant être raccordé ou étant raccordé à la conduite de transport de matières épaisses (51) pour introduire, en particulier automatiquement, un dispositif de séparation de milieux (M) dans la conduite de transport de matières épaisses (51).

15. Procédé (V) destiné à faire fonctionner, en particulier automatiquement, un système (100) selon la revendication précédente, le procédé (V) comportant les étapes :
a) réception d'un dispositif de séparation de milieux (M) entre le piston (8) se trouvant dans sa position finale de réception (PA) et l'espace intérieur (3) de boîtier ;
b) ajustage du piston (8) jusque dans sa position de ventilation intermédiaire (PZ) pour guider le dispositif de séparation de milieux (M) dans l'espace intérieur (3) de boîtier et fermer de manière étanche aux fluides l'espace intérieur (3) de boîtier en vis-à-vis de l'ouverture de sortie (4) ;
c) lorsque le piston (8) est dans sa position de ventilation intermédiaire (PZ) : soumission au moins de la zone (7) d'espace intérieur de l'espace intérieur (3) de boîtier entre le dispositif de séparation de milieux (M) et le piston (8) à l'action d'un liquide propulseur (T) pour ventiler au moins la zone (7) d'espace intérieur au moyen du dispositif de ventilation (6) ; et
d) lorsqu'au moins la zone (7) d'espace intérieur de l'espace intérieur (3) de boîtier a été ventilée : ajustage du piston (8) dans sa position finale d'introduction (PE) pour séparer de manière étanche aux fluides le dispositif de ventilation (6) du dispositif de sollicitation (5) au moyen du piston (8) à l'intérieur de l'espace intérieur (3) de boîtier, de telle manière que le dispositif de séparation de milieux (M) est avancé au moyen du liquide propulseur (T) dans la direction d'introduction (E) dans la conduite de transport de matières épaisses (51) à l'écart du dispositif d'introduction (1).
